# EUROPEAN PATENT SPECIFICATION

(11) **EP 2 853 449 B1**
(45) Date of publication and mention of the grant of the patent: **28.10.2015**
(21) Application number: 14186843.0
(22) Date of filing: 29.09.2014
(51) Int. Cl.: B60R 16/023

(54) **Electrical junction box**
Elektrischer Verteilerkasten
Boîte de connexion électrique

(30) Priority: 30.09.2013 JP 2013204600
(43) Date of publication of application: 01.04.2015
(73) Proprietor: YAZAKI CORPORATION, Minato-ku Tokyo 108 (JP)
(72) Inventor: Miyazaki, Yoshiya, Makinohara-shi, Shizuoka 421-0407 (JP); Sasaki, Nozomu, Makinohara-shi, Shizuoka 421-0407 (JP); Sato, Koki, Makinohara-shi, Shizuoka 421-0407 (JP)
(74) Representative: Grünecker Patent- und Rechtsanwälte PartG mbB

(56) References cited:
- EP-B1- 0 497 198
- US-A- 5 777 843

## Description

### [Technical Field]

This invention relates to electrical junction boxes mounted in automobiles for distributing electric power.

### [Background Art]

While there are various configurations for electrical junction box to be mounted in the automobile, for example, as disclosed in Patent Literature 1, well-known is an electrical junction box (1) having a frame-like case body (2), and a plurality of cassette blocks (3, 4) in which an electronic component is to be mounted, one of the cassette blocks (3) is attached to above in the case body (2), and the other cassette block (4) below the cassette block (3) in the case body (2).

By being stacked in vertical two steps, the foregoing electrical junction box (1) and the cassette blocks (3,4) allow for an increase of the number of electronic components to be mounted without increasing a horizontal projected surface area. Also, when maintaining electronic component mounted to the lower step cassette block (4), removal of the upper side cassette block allows for maintaining the electronic component without removing the lower side cassette block (4) from the case body (2).

### [Citation List]

### [Patent Literature]

[PTL 1]
Japanese Patent Application Laid-Open Publication No. 2011-10514

### [Summary of Invention]

### [Technical Problem]

Disadvantageously, since in the foregoing electrical junction box (1) of PTL 1, although involving an advantage of maintaining the electronic component without removing the lower side cassette block (4) from the case body (2), the lower side cassette block (4) lies deep in the case body (2), in the case of an opening of the case body (2) being narrow, it is difficult to put an operator's hand or a tool within the case body (2), and to maintain the electronic component.

Accordingly, the invention is intended to provide an electrical junction box provided with a frame including an upper side component mounting section and a lower side component mounting section, allowing for readily maintaining the electronic component mounted to the lower side component mounting section.

### [Solution to Problem]

The invention according to one aspect is related to an electrical junction box, including a frame including a peripheral wall, an upper side component mounting section located above in the peripheral wall, to which an electronic component is mounted, and a lower side component mounting section located below the upper side component mounting section in the peripheral wall, to which the electronic component is mounted, wherein a portion of the upper side component mounting section and a portion of the peripheral wall are integrally provided and are made attachable to a remaining portion of the frame, and wherein the lower side component mounting section is located below the portion of the upper side component mounting section.

### [Advantageous Effects of Invention]

According to the invention of the one aspect, since the portion of the upper side component mounting section and the portion of the peripheral wall are integrally provided and are made attachable to the remaining portion of the frame, and the lower side component mounting section is located below the portion of the upper side component mounting section, when maintaining the electronic component mounted to the lower side component mounting section, removal of a portion composed of the portion of the upper side component mounting section and the portion of the peripheral wall from the remaining portion of the frame eliminates a portion of the peripheral wall surrounding the lower side component mounting section, making it easy to put the operator's hand or the tool below in the peripheral wall. Therefore, it is made possible to readily maintain the electronic component mounted to the lower side component mounting section.

### [Brief Description of Drawings]

[Fig. 1]

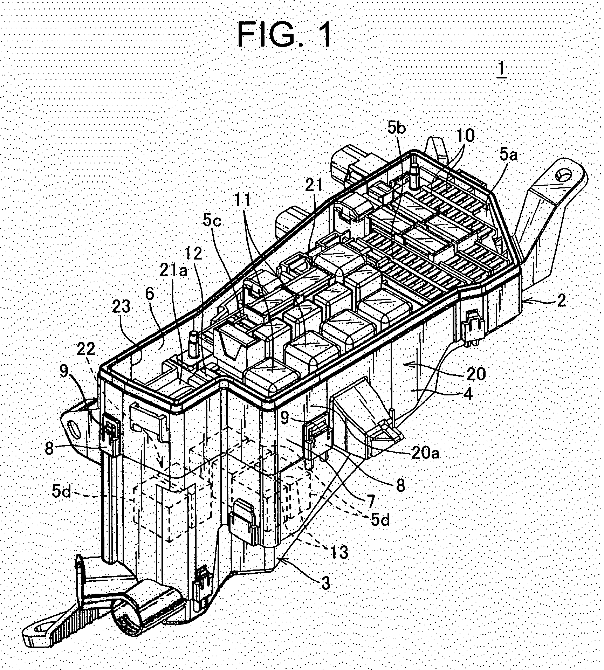

   FIG. 1 is a perspective view illustrating an electrical junction box according to an embodiment of the invention;
[Fig. 2]

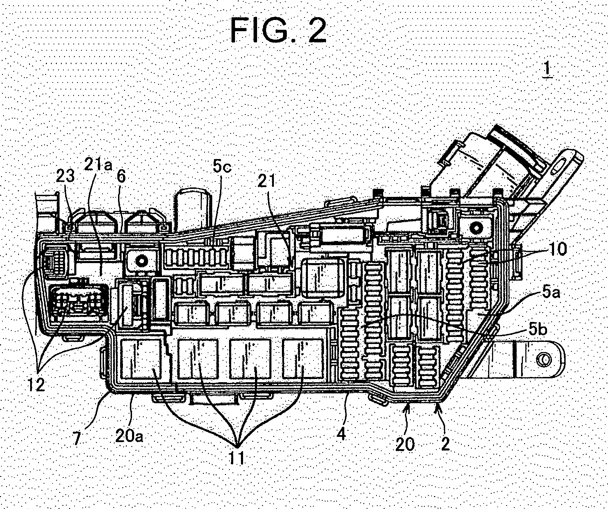

   FIG. 2 is a plane view illustrating the electrical junction box shown in FIG. 1;
[Fig. 3]

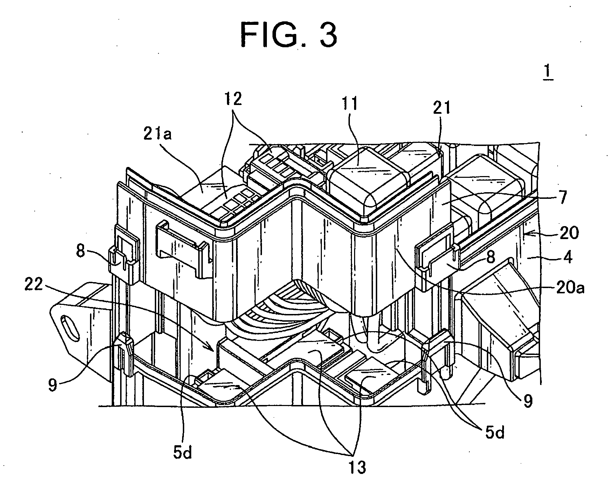

   FIG. 3 is a perspective view illustrating a state of removal of a divided section shown in Fig. 1 from the frame body; and
[Fig. 4]

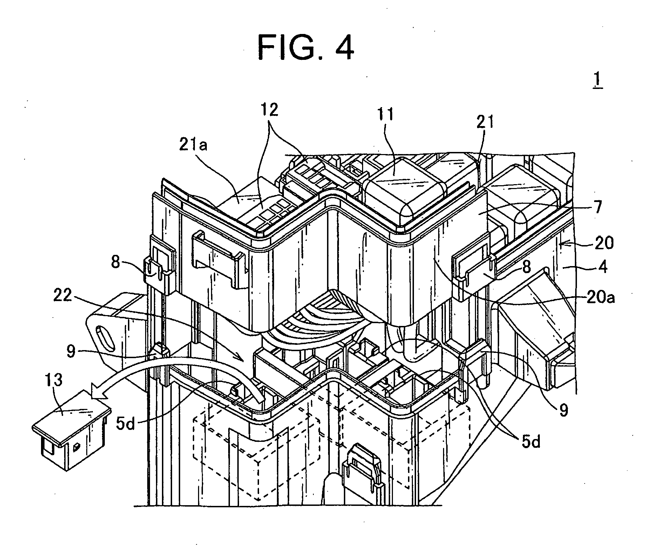

   FIG. 4 is a perspective view illustrating a state of removal of a relay from the lower side component mounting section shown in Fig. 3.

### [Description of Embodiments]

Referring now to Figs. 1 to 4, "an electrical junction box" according to one embodiment of the invention will be discussed. An electrical junction box 1 shown in Fig. 1 is mounted to an automobile to chiefly distribute electric power. This electrical junction box 1 is provided with a synthetic-resin-made frame 2, a plurality of electronic components 10 to 13 to be attached to the frame 2, a synthetic-resin-made lower cover 3 to be attached to a lower face side of the frame 2, and a synthetic-resin-made upper cover (not shown) to be attached to an upper face side of the frame 2.

The frame 2 is provided with a frame-like peripheral wall 20, an upper side component mounting section 21 located above in the peripheral wall 20, to which a plurality of electronic components 10, 11, 12 are to be mounted, and a lower side component mounting section 22 located below the upper side component mounting section 21 in the peripheral wall 20,to which a plurality of electronic components 13 are to be mounted. Also, the frame 2 is configured such that a plurality of blocks 5a, 5b, 5c, and 5d, a side cover 6, a divided section 7, and the like are assembled to a frame body 4 (corresponding to "a remaining portion of the frame" in claims) including a main portion of the peripheral wall 20.

The foregoing blocks 5a, 5b, 5c are each provided with a plurality of component mounting sections to which electronic components 10, 11 is to be each mounted. These blocks 5a, 5b, 5c are assembled to within and above the frame body 4, so as to configure the upper side component mounting section 21. These blocks 5a, 5b, 5c do not include the peripheral wall 20. In the invention "the upper side component mounting section 21" is defined as a whole of the plurality of component mounting sections disposed at the upper side of the frame 2.

The plurality of blocks 5d is provided with a plurality of component mounting sections to be mounted to each electronic component 13. The plurality of blocks 5d is assembled to within and below the frame body 4 so as to compose the lower side component mounting section 22. The plurality of blocks 5d does not include the peripheral wall 20. In the invention "the lower side component mounting section 22" is defined as a whole of the plurality of component mounting sections disposed at the lower side of the frame 2. Also, in the electrical junction box 1 two component mounting sections to which the relay 3 is mounted are disposed at each block 5d, the lower side component mounting section 22 is composed of three blocks 5d.

The side cover 6 is located at a notch 23 formed at the peripheral wall 20.

The foregoing divided section 7 is formed such that a portion 21a of the upper side component mounting section 21 and a portion 20a of the peripheral wall 20 are integrally provided. As shown in Fig. 2, in the electrical junction box 1 the portion 21a of the upper side component mounting section 21 includes three component mounting sections a connector 12 is attached to, and one component mounting section the relay 11 is mounted to. The portion 20a of the peripheral wall 20 is provided with two latch receiving parts 8. These latch receiving parts 8 is latched in a latch part 9 disposed at the frame 4. The divided section 7 is, when assembled to the frame body 4, secured to the frame 4 by latching the latch part 9 in the latch receiving part 8. The foregoing lower side component mounting section 22 is located below the divided section 7.

In the electrical junction box 1 configured as mentioned above, when changing the relay 13 mounted to the lower side component mounting section 22, as shown in Figs. 3 and 4, unlatching of the latch receiving part 8 and the latch part 9, removing of the frame body 4 from the divided section 7 and lifting upward of the divided section 7 (because an electric wire is drawn from a lower face of the divided section 7) perform changing of the relay 3.

Since in the electrical junction box 1 the portion 21a of the upper side component mounting section 21 located above the lower side component mounting section 22 and the portion 20a of the peripheral wall 20 are thus divided as the divided section 7 from the frame body 4, when maintaining the relay 13 attached to the lower side component mounting section 22, removal of the divided section 7 from the frame body 4 allows for eliminating the portion 20a of the peripheral wall 20a surrounding the lower side component mounting section 22, making it easy to put the operator's hand or the tool downward in the peripheral wall 20. Thereby it is made easy to maintain the relay 13.

Note that the aforementioned embodiments merely typically discloses the present invention, and are not intended to limit the invention. Namely, unless such changes and modifications depart from the scope of the present invention, they should be construed as being included therein.

### [Reference Signs List]

- 1: electrical junction box
- 2: frame
- 4: frame body
- 7: divided section
- 20: peripheral wall
- 21: upper side component mounting section
- 22: lower side component mounting section

## Claims

1. An electrical junction box (1), comprising:
a frame (2) including
a peripheral wall (20),
an upper side component mounting section (21) located above in the peripheral wall, and having an electronic component (10, 11, 12) mounted thereto, and
a lower side component mounting section (22) located below the upper side component mounting section in the peripheral wall, and having an electronic component (13) mounted thereto, **characterised in that** a portion (21a) of the upper side component mounting section and a portion (20a) of the peripheral wall are integrally provided forming a divided section (7) for removal from a remaining portion (4) of the frame, and wherein the lower side component mounting section (22) is located below the portion (20a) of the upper side component mounting section.

## Patentansprüche

1. Elektrischer Verteilerkasten (1), umfassend:
einen Rahmen (2), der enthält:
eine Umfangswand (20),
einen oberen Komponentenmontageabschnitt (21), der oben in der Umfangswand angeordnet ist und eine daran montierte elektronische Komponente (10, 11, 12) aufweist, und
einen unteren Komponentenmontageabschnitt (22), der unter dem oberen Komponentenmontageabschnitt in der Umfangswand angeordnet ist und eine daran montierte elektronische Komponente (13) aufweist,
**dadurch gekennzeichnet, dass:**
ein Teil (21 a) des oberen Komponentenmontageabschnitts und ein Teil (20a) der Umfangswand einstückig ausgebildet sind und einen geteilten Abschnitt (7) für eine Entfernung von einem restlichen Teil (4) des Rahmens bilden, und
der untere Komponentenmontageabschnitt (22) unter dem Teil (21 a) des oberen Komponentenmontageabschnitts angeordnet ist.

## Revendications

1. Boîte de connexion électrique (1) comprenant :
un châssis (2) incluant
une paroi périphérique (20) ;
une section de montage de composant côté supérieur (21) disposée au-dessus de la paroi périphérique et sur laquelle est monté un composant électronique (10, 11, 12), et
une section de montage de composant côté inférieur (22) disposée au-dessous de la section de montage de composant côté supérieur de la paroi périphérique et sur laquelle est monté un composant électronique (13),
**caractérisée en ce que**
une partie (21a) de la section de montage de composant côté supérieur et une partie (20a) de la paroi périphérique sont prévues de manière intégrée, formant une section divisée (7) pour retrait d'une partie restante (4) du châssis, et
dans laquelle la section de montage de composant côté inférieur (22) est disposée au-dessous de la partie (20a) de la section de montage de composant côté supérieur.
